# EUROPEAN PATENT APPLICATION

(11) **EP 2 154 643 A1**
(43) Date of publication of application: **17.02.2010**
(21) Application number: 09167721.1
(22) Date of filing: 12.08.2009
(51) Int. Cl.: G06Q 30/00

(54) **Measurement of content placement effectiveness over web pages and like media**

(30) Priority: 12.08.2008 US 222544
(71) Applicant: Cohen, David, 69395 Tel-Aviv (IL); Lerner, Hinda, 38885 Doar-Na Emek Hefer (IL); Lerner, Ofer, 69204 Tel-Aviv (IL)
(72) Inventor: Cohen, David, 69395 Tel-Aviv (IL); Lerner, Hinda, 38885 Doar-Na Emek Hefer (IL); Lerner, Ofer, 69204 Tel-Aviv (IL)
(74) Representative: Fichter, Robert Arno

(57) **Abstract**

A system estimates the part of a current content page that is currently visible on a user screen. A movement detection unit detects movement of the content page within the user's browser, and an estimator infers whether a particular content item of interest is within the currently visible area. The movement detection unit in one version detects operating system directives to find out whether the user is scrolling etc through the page. Alternatively an identifiable point is placed on the content item and continual measurement is made between identifiable point in the content and a point in the currently visible area. The system is useful for providing statistical data about the effectiveness of advertisement placement within web pages.

## Description

### RELATED APPLICATIONS

This Application is a Continuation-In-Part of PCT Patent Application No. PCT/IL2007/001466 having International Filing Date of November 27, 2007, which claims the benefit of U.S. Provisional Patent Application No. 60/861,083 filed on November 27, 2006. The contents of the above Applications are all incorporated herein by reference.

### FIELD AND BACKGROUND OF THE INVENTION

The present invention relates to a system and method for measuring of effectiveness of content placement over the Internet, in particular advertising content and, more particularly, but not exclusively to a method and apparatus for measuring the effectiveness of advertising placement over web pages and like media.

It is generally a concern of advertisers to ensure that advertising content reaches a target audience and receives attention. Sales depend on the attention paid by the target audience to the advertising content. There are numerous systems for attempting to direct content at target audiences, and the issue certainly predates the Internet. From the very earliest days of computing, packages allowed names and addresses to be labeled so that mailshots could be directed at persons marked with particular labels. Advertising in journals is often targeted at typical profiles of readers of the particular journal. Furthermore, advertising rates for the journals are often variable according to the location in the journal so that locations likely to gain more attention are priced higher.

Advertising on web sites is very similar to advertising in journals, in that placement of advertising content can easily be based on an expected reader profile, and location within the website and on the webpage can be selected and priced according to the expected amount of attention.

At the moment however, journals and web pages have in common that the difference in the amount of attention an advertisement receives based on its location on the page is something that can only be estimated. It is not possible to know which part of the page can be expected to receive more attention. It is not possible to know which part of the page in fact received more attention and it is certainly not possible to charge for the advertising based on attention actually received. One reason for this is that a web page is downloaded as a whole from a webserver in a single operation, and then the browser lays out the page and allows the user to scroll through the page etc without further reference to the server. The server thus simply does not know which part of the page the user is looking at.

It is of course possible on the Internet to pay for advertising based on the number of clicks received but there is no way to determine to what extent the advertisement has been seen.

There is thus a widely recognized need for, and it would be highly advantageous to have, an advertising attention measurement system devoid of the above limitations.

### SUMMARY OF THE INVENTION

According to one aspect of the present invention there is provided a system for measuring on-screen content item effectiveness, the content item being located at a predetermined location in a content page, the content page being for display through a user client defining a currently visible area such that at any given time only part of the content page is within said currently visible area, the user client allowing a user to move through the content page to change the part of the content page within the currently visible area, the system comprising:
a movement detection unit for detection of movement of the content page within the user client, and

an estimator, associated with the movement detection unit for inferring whether the content item is within the currently visible area thereby to infer the effectiveness from the amount of time the content item is visible on a user screen.

In an embodiment, said movement detection unit comprises a layer associated with said user client for extracting operating system directives relating to said movement.

In an embodiment, said layer is a transparent layer.

In an embodiment, said content page comprises an identifiable location, and said movement detection unit comprises a measurement unit associated with said user client for measurement of a distance from a predefined point on said currently visible area to said identifiable location.

In an embodiment, said movement detection unit is for association with said user client and said estimator is for association with a remote server.

In an embodiment, said content page is divided into a grid, said grid defining a plurality of regions, and said estimator is configured to estimate which of said defined regions are in said currently visible area.

In an embodiment, certain of said regions carry content items of interest and said estimator is further configured to estimate where within said currently visible area said certain regions are located.

An embodiment may comprise a premium allocation unit for assigning an added value to a content item located at a predetermined premium location within said currently visible area.

An embodiment may comprise a timer, associated with said estimator, for providing data as to how long said content item remains within said currently visible area.

In an embodiment, said premium allocation unit further comprises a timer for providing data as to how long said content item is located at said predetermined location.

An embodiment may comprise a statistical analyzer for comparing data of said premium allocation unit with external data of effectiveness of said content item in order to provide a measure of effectiveness of given locations within visible areas.

In an embodiment, said external data comprises click-through data.

In an embodiment, said external data comprises subsequently obtained sales data.

An embodiment may comprise a statistical analyzer for comparing data of said estimator with external data of effectiveness of said content item in order to provide a measure of effectiveness of given locations within visible areas.

An embodiment may comprise a pricing unit for pricing content item location according to said inferring.

An embodiment may comprise a pricing unit for pricing content item location according to said added value.

An embodiment may comprise a pricing unit for pricing content item location according to said added value and said timing data.

In an embodiment, said estimator is associated with an initializer unit for obtaining operating system and screen resolution data of a user initially connecting to a provider of said content page.

An embodiment may comprise a focusing unit for identifying operating system activity indicating attention around said content item.

In an embodiment, said focusing unit is configured to rank said operating system activity into higher and lower ranks where higher ranks indicate said attention around said content item and lower ranks indicate attention away from or unconnected with said content item.

In an embodiment, said focusing unit is configured to identify operating system activity indicating user attention or absence of user attention to the screen.

An embodiment may use an indication of screensaver activity as an indication of lack of user attention to the screen.

According to a second aspect of the present invention there is provided a method for measuring on-screen content item effectiveness, the content item being located at a predetermined location in a content page, the content page being for display through a user client defining a currently visible area such that at any given time only part of the content page is within said currently visible area, the user client allowing a user to move through the content page to change the part of the content page within the currently visible area, the method comprising:
detecting movement of the content page within the user client,
inferring whether the content item is within the currently visible area, and
inferring the effectiveness from the amount of time the content item is visible on a user screen.

In an embodiment, said detecting comprises extracting operating method directives relating to said movement.

In an embodiment, said content page comprises an identifiable location, and said detecting comprises measuring a distance from a predefined point on said currently visible area to said identifiable location.

The method may comprise dividing said content page into a grid, said grid defining a plurality of regions, and estimating which of said defined regions are in said currently visible area.

In an embodiment, certain of said regions carry content items of interest and said estimating further comprises estimating where within said currently visible area said certain regions are located.

The method may comprise assigning an added value to a content item located at a predetermined premium location within said currently visible area.

The method may comprise providing data as to how long said content item remains within said currently visible area.

The method may comprise starting said timing when said moving ceases and continuing timing until said moving starts again.

The method may comprise timing to provide data as to how long said content item is located at said predetermined location.

The method may comprise comparing data of said premium allocation unit with external data of effectiveness of said content item in order to provide a measure of effectiveness of given locations within visible areas.

In an embodiment, said external data comprises click-through data.

In an embodiment, said external data comprises subsequently obtained sales data.

The method may comprise comparing data of said estimator with external data of effectiveness of said content item in order to provide a measure of effectiveness of given locations within visible areas.

The method may comprise pricing content item location according to said inferring.

The method may comprise pricing content item location according to said added value.

The method may comprise pricing content item location according to said added value and said timing data.

The method may comprise obtaining operating method and screen resolution data of a user initially connecting to a provider of said content page.

The method may comprise identifying operating method activity indicating attention around said content item.

The method may comprise ranking said operating method activity into higher and lower ranks where higher ranks indicate said attention around said content item and lower ranks indicate attention away from or unconnected with said content item.

The method may comprise ranking operating method activity indicating user attention or absence of user attention to the screen.

The method may comprise using an indication of screensaver activity as an indication of lack of user attention to the screen.

According to a third aspect of the present invention there is provided a user client for association with a web browser, the web browser defining a currently visible area of a downloaded content page and allowing a user to move around the content page to change the part of the content page within the currently visible area, the client comprising:
a movement tracking unit for tracking said changing of the part of the content page within the currently visible area, and
a reporting unit for externally reporting said changing, thereby to enable a recipient of said reporting to externally reconstruct said changing.

In an embodiment, the movement tracking unit is configured to track movement by capturing and interpreting operating system directives.

In an embodiment, the movement tracking unit is configured to measure from a predetermined location on the currently visible area to an identifiable location on said downloaded content page.

According to a fourth aspect of the present invention there is provided an exposure server for interacting with clients over a network, the clients being associated with web content including advertising content at predetermined locations therein, the server being configured with:
an input for obtaining indications of currently visible content at a respective user,
an exposure calculation unit for calculating from said obtained indications how long said predetermined locations are visible at said respective user, and
a statistical processor for calculating overall exposure information regarding said advertising content over a plurality of clients viewing said content.

According to a fifth aspect of the present invention there is provided a method of electronically evaluating location on virtual real estate, comprising:
remotely monitoring web content received at a plurality of users over a network,
from said monitoring determining how long individual locations within said content are within the views of respective users,
from said determining, applying higher values to those locations longer within view and lower values to those locations less within view over said plurality of users, and
supplying said values in association with respective locations as output.

The method may comprise placing predetermined content at respective locations according to said determined value.

According to a sixth aspect of the present invention there is provided a reporting apparatus for network content, comprising:
detecting functionality for detecting usage of said content,
reporting functionality associated with said detecting functionality, for reporting said detected usage over a network, and
an embedding unit for embedding said detecting and said reporting functionality into content for distribution with said content over a network.

The apparatus may comprise generating functionality associated with said detecting functionality and said reporting functionality and configured for converting at least one parameter of said detected functionality into a code for said reporting.

In an embodiment, said at least one parameter is one member of the group consisting of a hardware type, an operating system type, a browser type, and an amount of time in focus.

In an embodiment, said detecting and reporting functionality comprises a Java object.

In an embodiment, said reporting functionality is configured to report at preset intervals.

In an embodiment, said reporting functionality is configured to report via an image file request.

The apparatus may be configured to provide individual users with an identity with respect to said current content.

The apparatus may be configured to use said provided identities to monitor pluralities of users connecting through a single IP address.

The apparatus may comprise a cookie management unit configured for exchanging data with a cookie.

In a further embodiment of the present invention there is provided a system for measuring on-screen content item effectiveness, the content item being located at a predetermined location in a content page, the content page being for display through a user client defining a currently visible area such that at any given time only part of the content page is within said currently visible area, the user client allowing a user to move through the content page to change the part of the content page within the currently visible area, the system comprising:
a movement detection unit for detection of movement of the content page within the user client, and
an estimator, associated with the movement detection unit for inferring whether the content item is within the currently visible area thereby to infer the effectiveness from the amount of time the content item is visible on a user screen, wherein said movement detection unit is downloadable independently of said content.

In an embodiment, said content is downloaded from a first server belonging to a web page provider and said movement detection unit is downloadable from a second server distinct from said first server as a web page add-on.

In an embodiment, said second server is one of a group comprising: a server belonging to an advertising service provider, a server belonging to a measurement service provider providing measurement of said content item effectiveness, and a server belonging to an advertising customer.

A further aspect of the present invention provides a system for measuring onscreen content item effectiveness, the content item being located at a predetermined location in a content page, the content page being for display through a user client defining a currently visible area such that at any given time only part of the content page is within said currently visible area, the user client allowing a user to move through the content page to change the part of the content page within the currently visible area, the predetermined location having a relationship to other content on the content page, the system comprising:
an estimator for inferring the effectiveness of the content item by estimating a relative location from neighboring content, evaluating at least one of an absolute and cultural value of said neighboring content and an absolute and cultural value of said relative location, and estimating said effectiveness from a combination of said relative location and said absolute and cultural value of said neighboring content.

A further aspect of the present invention provides an exchange for trading space in web content, based on measuring on-screen content item effectiveness, the content items being located at predetermined locations in content pages, the content pages being for display through user clients defining currently visible areas such that at any given time only part of the content pages are within said currently visible areas, the user clients allowing users to move through the content pages to change the part of the content pages within the currently visible areas, the system comprising:
a tail provided with respective content pages, the tail comprising:
   movement detection unit for detection of movement of the content page within the user client, and
   an estimator, associated with the movement detection unit for inferring whether the content item is within the currently visible area thereby to infer
the effectiveness from the amount of time the content item is visible on a user screen, and
an exchange for selling spaces within content pages based on evaluations by said estimator.

In an embodiment, said evaluation is an advance valuation and said selling is based on said advance valuations.

In an embodiment, said evaluation is a real time evaluation and said selling is based on accumulation of measured attention.

In a further aspect of the present invention there is provided a system for measuring on-screen content item effectiveness, the content item being located at a predetermined location in a content page, the content page being for display through a user client defining a currently visible area such that at any given time only part of the content page is within said currently visible area, the user client allowing a user to move through the content page to change the part of the content page within the currently visible area, the system comprising:
a movement detection unit for detection of movement of the content page within the user client,
an estimator, associated with the movement detection unit for inferring whether the content item is within the currently visible area thereby to infer the effectiveness from the amount of time the content item is visible on a user screen,
   and,
a content placement unit for placing content on content pages to a value based on said effectiveness.

In an embodiment, said evaluation is an advance valuation and said placing of content is to a value based on said evaluation as a forecast.

In an embodiment, said evaluation is a real time evaluation and said placement is made against accumulating evaluation.

According to a further aspect of the present invention there is provided a method for measuring on-screen content item effectiveness, the content item being located at a predetermined location in a content page, the content page being for display through a user client defining a currently visible area such that at any given time only part of the content page is within said currently visible area, the user client allowing a user to move through the content page to change the part of the content page within the currently visible area, the method comprising:
detection of movement of the content page within the user client, and
inferring whether the content item is within the currently visible area thereby to infer the effectiveness from the amount of time the content item is visible on a user screen, wherein said movement detection unit is downloadable independently of said content.

In an embodiment, said content is downloaded from a first server belonging to a web page provider and said movement detection unit is downloadable from a second server distinct from said first server as a web page add-on.

In an embodiment, said second server is one of a group comprising: a server belonging to an advertising service provider, a server belonging to a measurement service provider providing measurement of said content item effectiveness, and a server belonging to an advertising customer.

In a further aspect of the present embodiments there is provided a method for measuring on-screen content item effectiveness, the content item being located at a predetermined location in a content page, the content page being for display through a user client defining a currently visible area such that at any given time only part of the content page is within said currently visible area, the user client allowing a user to move through the content page to change the part of the content page within the currently visible area, the predetermined location having a relationship to other content on the content page, the method comprising:
inferring the effectiveness of the content item by estimating a relative location from neighboring content, evaluating at least one of an absolute and cultural value of said neighboring content, and an absolute and cultural value of said relative location and estimating said effectiveness from a combination of said relative location and said absolute and cultural value of said neighboring content.

In a further aspect there is provided a method for trading space in web content, based on measuring on-screen content item effectiveness, the content items being located at predetermined locations in content pages, the content pages being for display through user clients defining currently visible areas such that at any given time only part of the content pages are within said currently visible areas, the user clients allowing users to move through the content pages to change the part of the content pages within the currently visible areas, the method comprising:
providing a tail along with respective content pages, the tail comprising:
   movement detection unit for detection of movement of the content page within the user client, and
   an estimator, associated with the movement detection unit for inferring whether the content item is within the currently visible area thereby to infer
the effectiveness from the amount of time the content item is visible on a user screen, and
selling spaces within content pages based on evaluations by said estimator.

In an embodiment, said evaluation is an advance valuation and said selling is based on said advance valuations.

In an embodiment, said evaluation is a real time evaluation and said selling is based on accumulation of measured attention.

In a further aspect there is provided a method for measuring on-screen content item effectiveness, the content item being located at a predetermined location in a content page, the content page being for display through a user client defining a currently visible area such that at any given time only part of the content page is within said currently visible area, the user client allowing a user to move through the content page to change the part of the content page within the currently visible area, the method comprising:
detecting of movement of the content page within the user client,
inferring whether the content item is within the currently visible area thereby to infer the effectiveness from the amount of time the content item is visible on a user screen, and,
placing content on content pages to a value based on said effectiveness.

In an embodiment, said evaluation is an advance valuation and said placing of content is to a value based on said evaluation as a forecast.

In an embodiment, said evaluation is a real time evaluation and said placement is made against accumulating evaluation.

According to a further aspect of the present invention there is provided a system for measuring on-screen content item effectiveness, the content item being located at a predetermined location in a content page, the content page being for display through a user client defining a currently visible area such that at any given time only part of the content page is within said currently visible area, the user client allowing a user to move through the content page to change the part of the content page within the currently visible area, the system comprising:
a movement detection unit for detection of movement of the content page within the user client, and
an estimator, associated with the movement detection unit for inferring whether the content item is within the currently visible area thereby to infer the effectiveness from the amount of time the content item is visible on a user screen, wherein said movement detection unit is downloadable independently of said content a session identification associated with the movement detection unit for identification of the session in which the movement detection unit was downloaded, the session identification being limited by at least one member of the group comprising time since download and by a page refresh action.

According to a further aspect of the present invention there is provided a method for measuring on-screen content item effectiveness, the content item being located at a predetermined location in a content page, the content page being for display through a user client defining a currently visible area such that at any given time only part of the content page is within said currently visible area, the user client allowing a user to move through the content page to change the part of the content page within the currently visible area, the method comprising:
detection of movement of the content page within the user client,
inferring whether the content item is within the currently visible area thereby to infer the effectiveness from the amount of time the content item is visible on a user screen,
evaluating the neighborhood of the content item for absolute and cultural factors, and
attributing said inferred effectiveness to said neighborhood absolute and cultural factors.

Unless otherwise defined, all technical and scientific terms used herein have the same meaning as commonly understood by one of ordinary skill in the art to which this invention belongs. The materials, methods, and examples provided herein are illustrative only and not intended to be limiting.

Implementation of the method and system of the present invention involves performing or completing certain selected tasks or steps manually, automatically, or a combination thereof. Moreover, according to actual instrumentation and equipment of preferred embodiments of the method and system of the present invention, several selected steps could be implemented by hardware or by software on any operating system of any firmware or a combination thereof. For example, as hardware, selected steps of the invention could be implemented as a chip or a circuit. As software, selected steps of the invention could be implemented as a plurality of software instructions being executed by a computer using any suitable operating system. In any case, selected steps of the method and system of the invention could be described as being performed by a data processor, such as a computing platform for executing a plurality of instructions.

### BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in order to provide what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Fig. 1 is a simplified diagram showing an exemplary web-browser view of a web page carrying both basic content and advertising content.
Fig. 2 is a simplified diagram showing a system according to a preferred embodiment of the present invention for recognizing movement, that is page adjustment within the browser and using the recognized movement to estimate whether the advertising content is currently within the view.
Fig. 3 is a more detailed diagram of the system of Fig. 2 and in particular showing a first variation of obtaining motion estimation according to a preferred embodiment of the present invention.
Fig. 4A is a second, more detailed diagram of the system of Fig. 2 and in particular showing a second variation of obtaining motion estimation according to a preferred embodiment of the present invention.
Fig. 4B illustrates an item of content into which has been embedded an envelope which includes detect, generate and report functionality, in accordance with a preferred embodiment of the present invention.
Fig. 5 illustrates an advertising server connected via a network such as the Internet to user clients, according to a preferred embodiment of the present invention.
Fig. 6 is a functional flow chart showing operation of the server of Fig. 5 according to a preferred embodiment of the present invention.
Fig. 7 is a simplified flow chart showing operation of exposure estimation according to a preferred embodiment of the present invention.
Fig. 8 is a simplified flow chart showing exposure estimation using the motion estimation variation of Fig. 3, according to a preferred embodiment of the present invention.
Fig. 9 is a simplified flow chart showing exposure estimation using the motion detection variation of Fig. 4 according to a preferred embodiment of the present invention.
Fig. 10 is a simplified block diagram showing an embodiment of the present invention in which the tail is provided from one of a number of sources other than the web page provider.
Fig. 11 is a simplified flow chart illustrating absolute and cultural evaluation of web page locations.
Fig. 12 is a simplified block diagram illustrating an exchange for trading accumulated advertising space using embodiments of the present invention to evaluate the spaces traded.

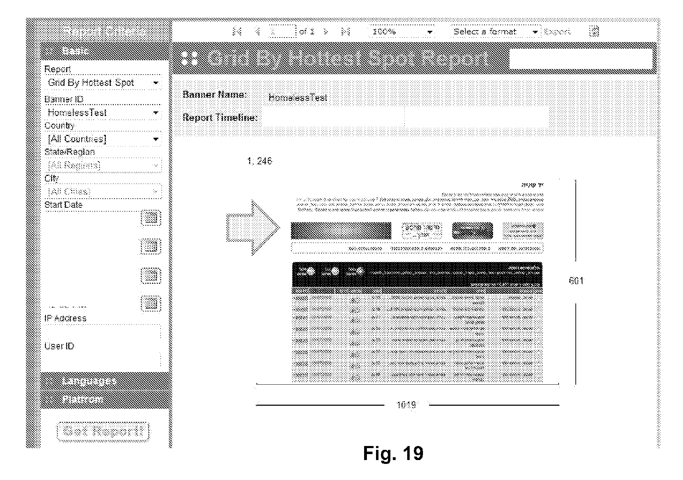

Figs. 13 - 19 are screen shots illustrating reports provided to the advertiser regarding use of the content on the Internet.

### DESCRIPTION OF THE PREFERRED EMBODIMENTS

The present embodiments comprise an apparatus and a method for estimating the amount of attention that has been directed by a user to content located on a web page. A preferred embodiment tracks the movement of the web page within the browser window so that an estimate can be made as to whether advertising content at a particular location on the page is currently visible to the browser, or whether actual web content is being read, say whether a student has actually read an article. That is to say the embodiment may track the user's attention over the web page content itself or over incidental content such as advertising content.

One method involves including an identifiable point, a landmark, at a given location on the web page. A user client then measures the distance from say the top of the user window, a fixed screen location, to the identifiable point and reports the measurement. The measurement allows an operator to know what part of the page is visible and he can then determine whether the advertising content is currently visible.

An alternative embodiment simply captures operating system directives and tracks activities such as scrolling. Again the location on the page, and the corresponding exposure of the advertising content, can be estimated.

To date the concept of exposure in relation to advertising has been an indication of how many people have been exposed to the advertisement and it has not been possible to make any inferences as to how much the advertisement has been within the intended target's scope of attention. Using the present embodiments the exposure of the advertisement not only includes numbers of people but also attention time, and according to preferred embodiments described below the levels of attention can also be graded. That is to say, using the present embodiments it is possible not only to determine how much time an article or other content item was open but also to make an estimate of the level of interest. The present embodiments would for example enable an advertiser to say that his advertisement reached ten thousand people and was at the center of their attention for an average of ten seconds.

The extracted data may be superimposed over a grid of the web page to show in graphical form the user - web page interaction.

The principles and operation of an apparatus and method according to the present invention may be better understood with reference to the drawings and accompanying description.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

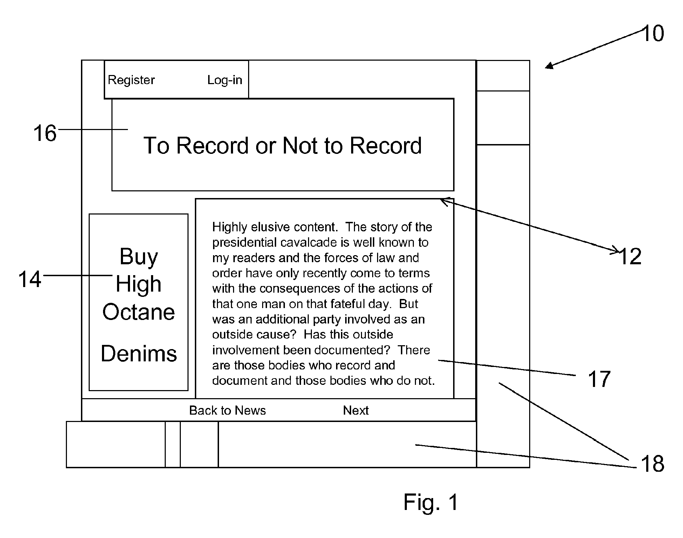

Reference is now made to Fig. 1, which is a simplified diagram illustrating a typical web page view 10 including primary content 12 and advertising content 14. The primary content is divided into two objects, a headline object 16 and a story 17. Scroll bars 18 at the right and lower sides of the view 10 allow the user to navigate through the page.

The advertising content is currently located at a fairly central location on the screen but as soon as the user scrolls down into the article the advertising content 14 may be expected to disappear at the top of the screen. Thus merely knowing whether a user has a web page open does not equate to knowing how much attention is being paid, or could even conceivably be paid, to given advertising content. If the particular web page has multiple content items then it would not be apparent which content item the user is currently viewing.

In the present embodiment the effectiveness of the advertising content item 14 is inferred from the amount of time the advertising content item itself is visible on a user screen, and it will be appreciated that this visible time, hereinafter exposure time, is only a fraction of the time that the web page on which it is located is visible on the user screen.

The advertising content item 14 is situated at a predetermined location in relation to content 12, that is within the current web page, and the web page is a typical web page for display through a user client such as a web browser, as is well known in the art. The browser does not show an entire page but rather defines a currently visible area which is just a fraction of the page, such that at any given time only part of the web page is within the currently visible area. As is well known, the browser allows a user to move through the content page to change the part of the content page within the currently visible area. For the purpose of navigating through the page it is possible to use arrow controls on a key board, or page up or page down commands, or to use a mouse or like interaction device with a cursor. Typically a web browser provides the sliders 18 at the side and base of the screen, as mentioned hereinabove, to allow cursor based navigation.

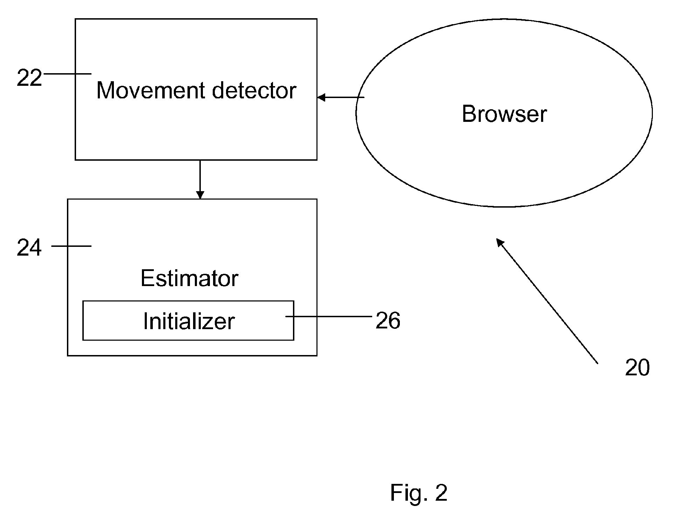

Reference is now made to Fig. 2, which is simplified diagram illustrating apparatus 20 for measuring on-screen content item effectiveness according to a first preferred embodiment of the present invention. In the diagram, a movement detection unit 22 detects movement of the content page within the user client, using for example one of a number of techniques explained below, and an estimator 24, is associated with the movement detection unit. The estimator uses movement information from the movement detector 22 to infer whether the content item 14 is within the currently visible area 10. From that it is able to provide data as to how long individual items of advertising content remain in view, that is the advertisement exposure time, and is thus able to provide advertisers with feedback as to good and bad locations on a website, as will be explained in greater detail below.

The estimator is preferably also associated with an initializer unit 26 for obtaining operating system and screen resolution data of the user initially connecting to a provider of the content page, so that movements on the screen can be related to page size and the like to make the estimates reasonable.

As will be explained below, the movement detector 22 is preferably provided as a layer within the user's browser program. The estimator may be based at the user or may be retained at a remote server.

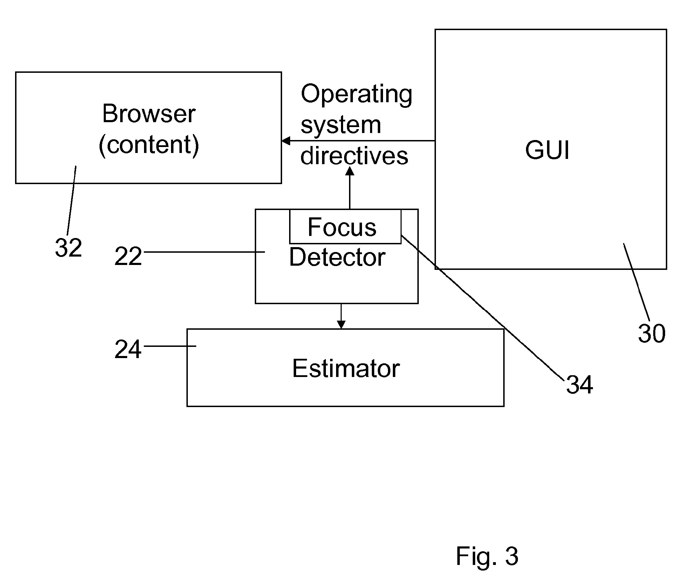

Reference is now made to Fig. 3, which illustrates one possible technique for movement estimation. In Fig. 3 the user interacts with the browser by issuing movement commands through a graphical user interface (GUI) 30. That is user interactions such as mouse clicks and key presses are captured by the GUI and changed into operation system directives which are passed on to the appropriate program, in this case the browser.

The movement detection unit 22 is a layer within the browser 32 as explained. The movement detector intercepts the operating system directives aimed at the browser, which include the movement commands for moving content around the browser. That is to say the movement detector recognizes and extracts operating system directives relating to movement of the content within the browser screen. Such a layer may recognize page up and page down commands, as well as mouse clicks. The layer, through initializer 26, is able to query the screen resolution and is thus able to relate incoming mouse clicks to the browser to determine whether for example the slider has been activated.

Such a layer is preferably fully transparent to the user. It will be appreciated that its operation is of no direct interest to the user, but rather is of interest to advertisers and to parties making advertising space available.

Detector 22 further comprises a focusing unit 34 for identifying operating system activity indicating attention around the content item. In addition to mouse clicks and key presses it is also possible to capture mouse movements from the operating system. A page across which a mouse was being moved is more clearly a center of attention than one on which no mouse movement is being detected. The focus unit uses the captured mouse movements to determine whether the window showing the content item has current focus and/or whether mouse movements etc are near or far from the location of the advertising content 14. That is to say the actual mouse or cursor movements are followed even without mouse clicks.

The focusing unit can be used to determine whether a particular user has paid attention to a particular article or the like that he is supposed to read. For example the focusing unit may indicate whether students have read a particular text that has been set for them. In addition the focusing unit can determine that a particular part of the article received particular attention. Thus it may be apparent that a particular part was especially difficult or especially interesting, information which can be useful when subsequently reviewing the website. In order to obtain such information the web page may be divided into a grid, as will be discussed in greater detail below. The grid may be a uniform grid or the page may be defined based on logical units of the content, as preferred. The system determines which areas of the grid were visible for how long and/or which areas of the grid had high levels of focus when visible. The grid is particularly useful where the analysis required is of the actual content of the web page and not of specific items on the page such as advertisements. The grid can also be used to analyze how long certain areas have been out of view and delays until they return to view, as will be discussed in greater detail below.

Furthermore the operating system directive for printing can be obtained so that the system knows if someone printed the article. Hence it is possible to presume that the article was given attention even though the focusing unit has not detected much focus.

Operation of the focusing unit and its ability to enhance the output of the presently considered system is discussed in greater detail below.

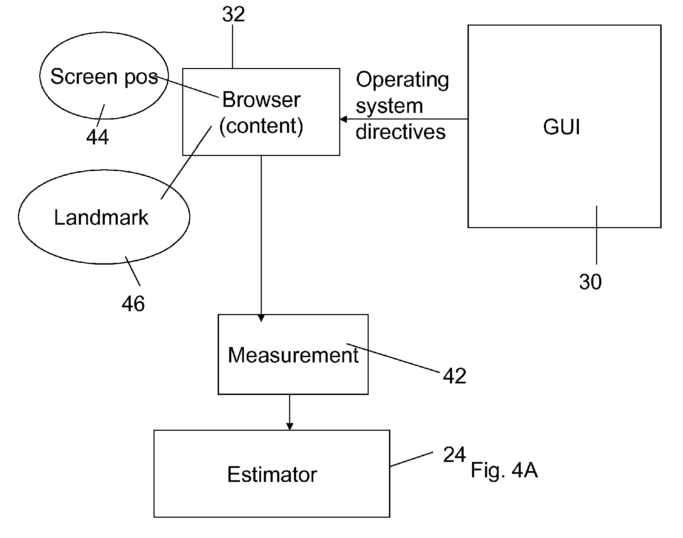

Reference is now made to Fig. 4A, which illustrates a second possible technique for detection of motion of the web page within the browser. In Fig. 4A the motion detector comprises a measurement unit 42 for measuring distance over a web page. The content page itself includes an easily identifiable location somewhere on the page, say a red dot on the right hand margin of the page. The location is referred to hereinafter as a landmark 42. The landmark is chosen to be easy for the measurement unit to detect. Measurement unit 42 continually measures distances from a predefined point on the browser screen- screen position 44, which is a convenient point on the currently visible area, to the landmark, the red dot. The screen position used may be for example the top right hand corner of the browser window. As the web page is scrolled through the browser the distance from the landmark to the top of the view changes, and it is this changing distance which can be used to estimate which part of the web page is currently being viewed.

From the measurement the position of the content in the browser can be determined and the current location of the advertising content can be inferred. The inference may be carried out at the layer itself, or alternatively at a remote server over the Internet, where advertising management is being carried out.

In either of the above techniques, the content page itself may be divided into a grid, each grid square being individually identifiable. The estimator 24 uses the output of the movement detector to determine which grid space best describes the currently visible area. The current grid space is then produced as the output, so that the estimator knows which of the grid regions is in the currently visible area. It is particularly advantageous to produce a result in terms of grid squares rather than absolute measurements as this produces a more compact result which can be used directly.

The embodiment of Fig. 4A may also include focusing unit 34, as discussed above in respect of Fig. 3, to indicate operating system activity around the advertising content.

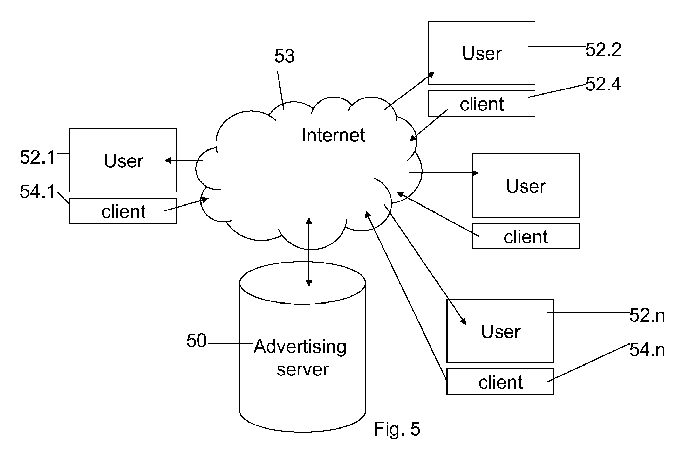

Reference is now made to Fig. 5, which illustrates a central advertising server 50. The server may provide advertising content to users 52.1...52.n over the network, typically the Internet 53, or it may simply be informed by a content server that relevant advertising content has been supplied to a given user at a location specified on a given web page. Server 50 then receives reports from user clients 54.1...54.n regarding the content and how it is being used. That is to say the server sets up sessions for individual users, receives reports of the current location of the page, from the detector or estimator in the local client and then determines how much exposure individual advertisements are getting. The results are then treated statistically, as will be discussed in greater detail below, in order to provide results which may be of use to advertisers and to parties interested in placement of advertisements.

It will be appreciated that the estimator 24 may be located at the user client or may be located at the server as preferred, simply receiving raw or partly processed input from the movement detector over the Internet 53.

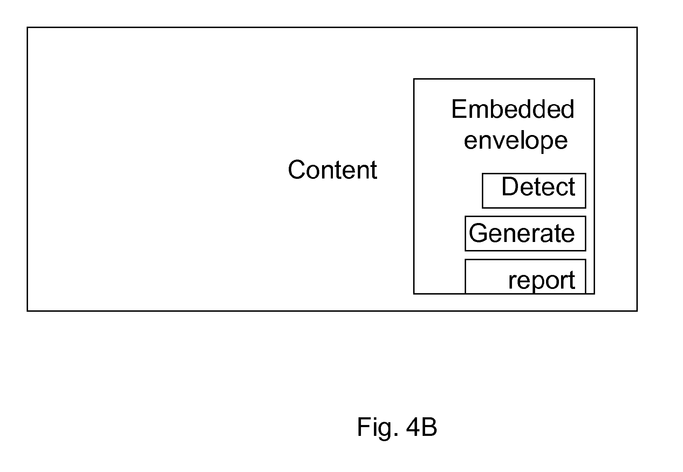

Reference is now made to Fig. 4B which is a simplified diagram illustrating a further preferred embodiment of the present invention. As shown in Fig. 4B an item of content 41 comprises an embedded envelope 43. Within the envelope, there is provided detecting functionality 45, generating functionality 47, and reporting functionality 49. The content 41 may be an article, an advertisement, a banner, an email or any like system of content delivery to a user. The embedded functionality then generates unique numbers, say at regular intervals, which are returned to the sender. The unique number may for example be a hash based on system parameters, say the operating system and may further include data generated from focus measurements or any other available parameters. Alternatively the focus information may simply be inferred from the fact that the report is made since the functionality may be set to report only when in focus. In this way an advertiser is able to send out a million advertisements and know what happens to his million exposures. Likewise, as an alternative to paying for click-through, advertisers could be charged for the time that the advertisement is in focus.

The embedded functionality may thus generate regular snapshots of usage and also show the types of machines the advert is being shown on.

Another use for the above is where the functionality is not associated with a visible advertisement at all. Rather the number is associated with content and reports on its use, giving a rights holder the ability to determine what is happening with his content, and crucially also the possibility of being able to prove that it is his. A further use for the functionality is to monitor confidential data. A tag could be placed on an email to report when it is sent to a new person, or report if it has been printed out or the like.

A database management system is provided to analyze the data obtained from the functionality.

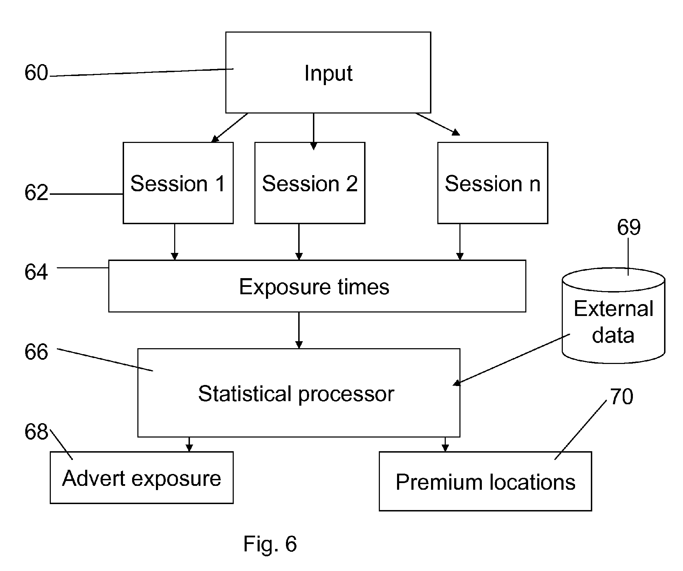

Reference is now made to Fig. 6 which is a simplified diagram that shows the functional breakdown of server 50. Server 50 receives input from the user clients, as described above at input unit 60. The input is separated into sessions 62 per individual client. The sessions know which web page is being viewed by the corresponding user and which advertisements are located thereon, so that the location information can be translated into exposure information of individual advertisements. The exposure times from the individual sessions are collated at exposure time buffer 64, and the data from the buffer is supplied to a statistical processor 66.

Statistical processing of the information can then produce multiple kinds of useful information about the advertising content, as will be appreciated by the person skilled in the art. Two outputs are shown as being of particular interest. A first output that is discussed is advertisement exposure unit 68. Advertisement exposure unit 68 produces overall exposure data for individual advertisements. Such information can be used to pay website providers or hosts for their services in providing the exposure, or can be used by advertisers to judge the effectiveness of their campaigns, in particular the effectiveness of the current positioning of the advertisements on the web sites.

A database 69 may be provided for storing externally received data regarding the advertisement content in question. Such data may include clicks received by the advertisements. Exposure time can for example be compared to clicks received or other measures of advertising effectiveness in order for the advertiser to better understand what is happening with his advert. Thus an advertisement that is getting lots of exposure but very little response can indicate that the wrong audience is being targeted. By contrast an advert that is getting little exposure but a relative high response is an indicator that investment in higher exposure for this advertisement would be worthwhile.

An alternative output that statistical processor 66 can provide is an indication of where the premium locations are on given web pages and web sites, and Fig. 6 indicates premium location output 70. The premium location indicator does not show data of individual advertisements but rather considers website and page locations. The indicator may for example show that a particular web page on a given site is viewed more than others, or that adverts on the upper half of the page are viewed more than those on the lower half and such like data. The result is that premium locations for advertising placement are identified.

The output of the premium location unit 70 may also be compared with external data from database 69. A comparison of site or page location with click through data may indicate for example that adverts on the right hand side of a page receive more clicks than adverts on the left hand side of the page or vice versa, or that the side of the page makes no difference, or that being located above a headline leads to more clicks for the same exposure as being located below a headline, and the like.

Using the above technology, the web site owner is enabled to charge differential rates depending on the location on his website as indicated by the premium location indicator 70.

It will be appreciated that determining exposure of an advertisement requires timing for providing data as to how long the advertising item remains within the currently visible area. Timing may be provided at the user client or at the server or at both. If at the user client it is preferably associated with the estimator 24, and may utilize the timer of the client's host processor. While timing at the server is also possible, it is less reliable as it is subject to data delays associated with data transfer over the Internet. In most cases the difference however is probably negligible, and can often be discounted statistically.

The timer may begin to operate when movement at the browser ceases, and may be reset when movement begins again. Thus the timer is able to provide exposure data.

As explained, the statistical analyzer may compare exposure data with external data of effectiveness such as click through information in order to provide a measure of effectiveness of given locations within visible areas. However as well as click-through information, actual responsiveness to adverts in terms of sales data can also be used. Although sales data is not generally available in real time it can often be related to the individual advertisement that triggered the sale and thus can be taken into account by the system. The sales data, like the click through data, may be held at external data database 69.

The statistical analyzer can compare the exposure data with external effectiveness data such as click through or actual sales data in order to provide a measure of effectiveness of given locations within visible areas as explained above, but in addition the locations compared can be in relation to objects on the page. Thus it can be determined whether advertisements immediately above a headline are better than advertisements on the left of the main story, and the like, again as explained above.

The premium location unit 70 may be connected to an automatic pricing unit for pricing content item location according to any of the information gained above, including exposure data, and exposure related to external data. The location of the advertisement may now constitute definitive quantifiable added value to the advertiser.

As mentioned above in respect of Fig. 2, the estimator 24 is associated with an initializer unit 26. The initializer unit obtains operating system and screen resolution data of a user initially connecting to a provider of the content page carrying the advertisement of interest such as screen resolution. The data provided by the initializer can be used directly by the local estimator within the user client or it can be sent to the server which makes use of the information.

In the above, reference was made to focusing unit 34, which looks at operating system activity. In particular the focusing unit is able to identify operating system activity indicating attention around the content item. Attention in the vicinity of the advertisement indicates user focus, and the focusing unit is preferably configured to rank the operating system activity into higher and lower ranks, where higher ranks indicate attention being given to the content item and lower ranks indicate attention away from or unconnected with the content item. Thus the focus item would be able to tell which of two currently open windows on a screen a user is currently interacting with, and give the advertisement a higher ranking if it is in the active window even though both windows are visible. Likewise the browser is able to identify cursor activity immediately around the advertisement. An advertisement with proximate cursor activity would receive a higher ranking than an advertisement where the cursor activity is at the opposite edge of the window.

Furthermore, the focusing unit identifies operating system activity indicating user attention or absence of user attention to the screen. For example, activation of the screensaver would indicate that the advertisement is not being looked at.

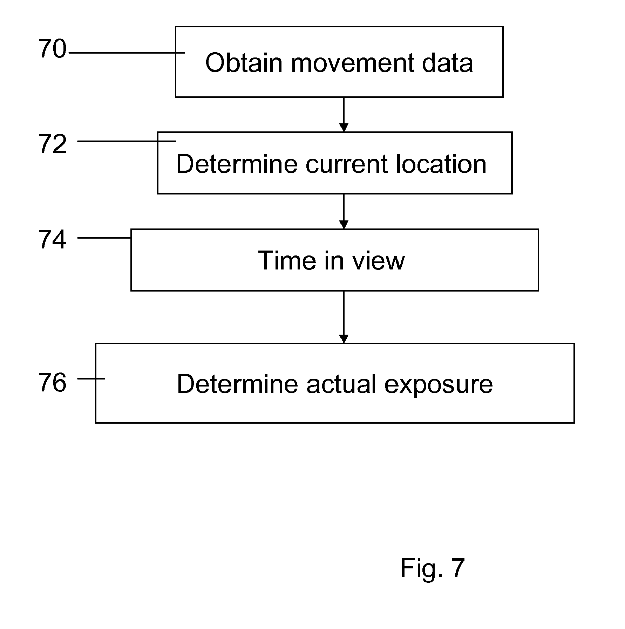

Reference is now made to Fig. 7, which is a simplified diagram illustrating operation of the system of the present invention. A stage 70 involves the user client detecting movement of the content within the browser window. A stage 72 involves inferring from the movement whether the advertising content is currently visible, or more likely, which advertising content is currently visible as the page may include two or more such items. A stage 74 involves timing, say starting a timer when movement ceases and stopping when movement resumes. A stage 76 then involves calculating the exposure time for the given item.

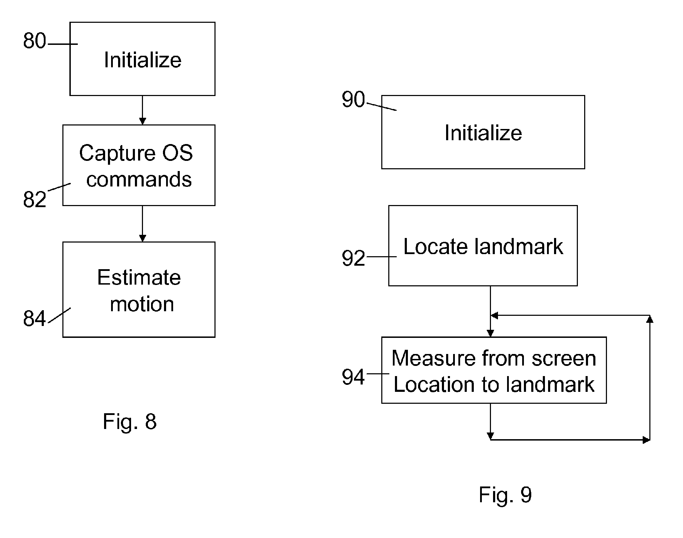

As mentioned above there are two methods for measuring movement. A first method is illustrated in the flow chart of Fig. 8, and involves capturing initialization information, such as screen size and resolution, capturing operating system commands 82, and estimating motion 84. The method shown in Fig. 8 corresponds to the apparatus described in Fig. 3 hereinabove.

The second method is shown in Fig. 9. Initialization 90 is carried out as necessary. The landmark, as mentioned above something easy to identify, say a red spot, is identified in stage 92 and the distance from the landmark to a specific location on the visible area, say the top right hand of the viewable area, is continually measured as long as the particular page remains on the screen. The method discussed in Fig. 9 corresponds to the apparatus shown in Fig. 4 above.

The above may be implemented by injecting a tail into a web page. Alternatively the object may already be present in the browser or may arrive from any other source. If the object arrives with the page, then typically it is in the form of Javascript embedded within the page, such as a Java object. The object firstly determines the size of the visible window currently in use by the browser. The movement of the web page over the window is tracked by the Javascript using any of the methods outlined above, and the Javascript communicates with its source server using file requests or image requests. The javascript thus sends out what appear to be mere image requests, routine for any web page and furthermore it is quite routine for webpages coming from one server to request images from another server. Thus the communication with the source server is not interfered with by firewalls and the like.

The Javascript may keep track of the size and location of the window, window X and window Y. After all, users often vary the sizes of their windows, in particular changing between full screen and half screen but often varying the half screen settings as well. Then the position of the banner or other material of interest, banner X and banner Y, is tracked in relation to the window. A browser focus flag may be set and tracked to determine whether the browser window currently has focus. Document height and document width may be traced. Also the cursor X and cursor Y values are of interest since these give information about the user's focus of attention, as explained, and mouse clicks themselves are of interest.

The user's field of view is also affected by the size of the screen. So data of the user's screen size may be sent to the source server. Clearly such data does not change dynamically so this need be sent only once.

In an embodiment the Javascript reports at set intervals, say every five seconds. In addition it may report upon preset events such as mouse clicks. It is of particular interest to follow mouse clicks since a mouseclick may indicate the user leaving the page or interacting with the material of interest.

The javascript embodiment does not require a cookie, since the functionality necessary is included in the tail provided with the web page. Furthermore there is no interest in identifying users as individuals. If necessary, information can be added to or exchanged with any cookie provided by the website which is the source of the content of interest. Additionally or alternatively, the present embodiment could provide its own cookie. In either case, the cookie may contain non-varying information about the user's system, such as his screen size. Additionally or alternatively, the cookie may contain information about the user himself that would be of interest to an advertiser, such as age, sex and social group.

The Java object of the present embodiment merely indicates to the remote server what is happening to the content of interest. The privacy of the individual web user is not compromised as no attempt is made to identify individual users. Nevertheless the javascript, or java or other object, may give the current web page session an identification or ID. The identification may be unique to the current viewing of the individual web page and need not identify the individual user. The object does not rely on the IP address because often multiple users share a single IP address. Thus the present embodiments provide a way of monitoring multiple users at a single IP address.

The session ID may be unique for the web page itself, or for each individual banner. Furthermore it may be limited to a certain time value, say expiring five minutes after download, or being renewed with a page refresh or banner refresh.

The Java object provides dynamic information of the web page and how it is being viewed. What is transmitted back to the server is merely movement and change information but the movement and change information may be superimposed back onto a grid of the web page to show what was looked at and for how long. The statistical processor is then able to analyze the data over all the different sessions to see how users behaved with the page, where the banners were during the course of the session and or what parts of the page excited more or less interest from the users. The page can be divided into a uniform grid or into logical areas as desired, and the user's progress through the grid areas may be traced.

Any web page that is larger than a single screen has parts that are out of view. The present embodiments may further provide data regarding how long a grid area was out of view and how long on average it takes to return to view. Grid areas can be ranked in order of how long they take to return to view once they have left.

Thus results may be produced along the lines of seeing that most users spend most of their time in grid B2 whereas the banner of interest is in A2. However it may be noted that area A2 was initially presented to the users and generally returned to before leaving.

Thus a web page designer may obtain valuable data regarding how his web page is viewed by the public, and may obtain data useful to convince an advertiser to pay more for placing an advert at a clearly popular location.

Alternative results that can be produced may be that the banner was seen by X thousand users for a total Y amount of time, with average amount of focus of Y/X time.

Alternative results may show what happened to all attempts to view the page between 10pm and 11pm in Spain.

A tail, which may include the identification and movement measurement mechanism, is generated in association with a known object in accordance with its estimated URL or location therewithin. Tail generation may occur at the hosting web-site, with the tail embedded in the HTML downloaded. Alternatively the tail may be downloaded from a different server. As a further alternative, the tail may be generated at the user. As yet another alternative, a magazine of tails may be downloaded to the user for storage for subsequent use. For example a magazine of 500 tails may be downloaded to a user. Each time certain data is encountered, say via a cookie mechanism, one of the tails is activated, meaning that the reporting mechanism is activated to provide the relevant measurement information. A session ID is then created which relates to the URL, so that any reports received can be analyzed in context. It is further possible for a session ID to relate to an individual item on a web page, so that a single webpage with multiple items may have multiple session IDs. An HTML tag identifying the relevant URL in the session ID enables the incoming reports to be sorted. Alternatively, a session ID can be generated in association with an object without its URL, and then can be sorted in accordance with the URL from which it was received. For example an advertiser buys a thousand banner exposures. The banners are delivered to different URL pages. We do not know at any given moment which banner appeared at which URL, but on receiving the reports it is possible to place the banner at the particular URL indicated.

### Management at Internet Service Provider (ISP)

An application of the above is in management by an ISP of data downloading. For example certain websites may be sources of heavy downloading and to date the ISP is unable to manage data downloading in relation to these specific sites. The ISP may download to the user a magazine as described above, where a tail is activated each time a user connects to a given website it is desired to monitor. The tail can then measure the actual volume of the transaction. As a result the ISP is able to evaluate the burden caused by the particular website. The ISP is then able to modify the bandwidth available to the given site, or bill the site or react in any other way.

### Tail At Customer's or Advertiser's websites

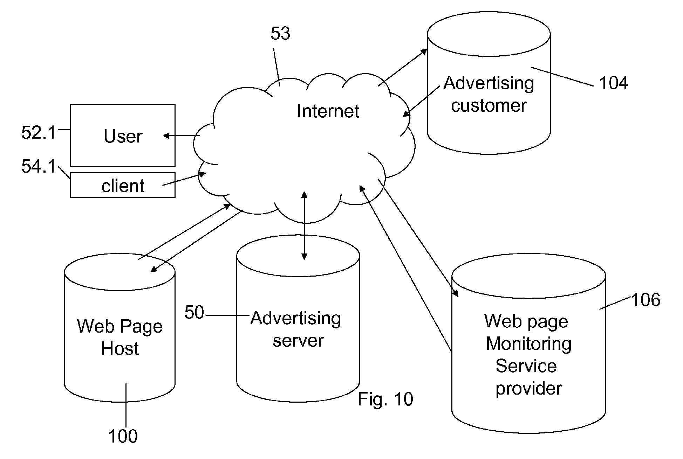

Reference is now made to Fig. 10, which illustrates a further embodiment of the present invention. As explained above, the tail comprises active code downloaded with the web page which provides reports about how the web page is being viewed. The web page is downloaded by user 52.1, from a web page host 100. As is often the case the web page host only provides the content of the web page. Add-ons such as banners and advertising are dynamically defined and in fact sourced from other servers such as advertising server 50. Typically an undefined space is left on the web page with a link to an advertising server, and the advertising server then provides dynamically defined content for the spaces.

The tail may be included as an add-on with the advertising from the advertising server. Thus the provider of advertisements is able to gauge the effectiveness of his advertisements and as desired charge his customers, the advertisers, hereinafter advertising customers.

As an alternative the tail may be provided by the advertising customer via his server 102 so that he can see who is looking at his advertisements. Thus he can form his own independent view of how well his advertisement is doing. In this way, he can check on the charges made by the advertising service.

As a further alternative, the tail may be provided by the web page monitoring service provider, who supplies the service described herein to advertisers and others, via his own server 106.

### Cultural Evaluation of Locations

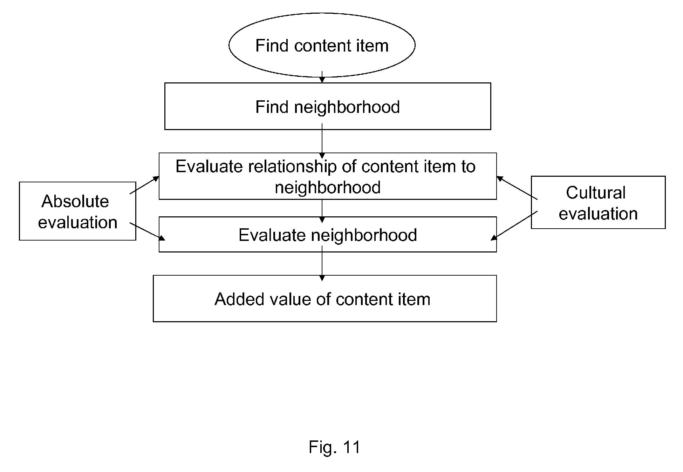

Reference is now made to Fig. 11, which is a simplified flow chart illustrating a method for evaluation of locations in web pages based on absolute or cultural values. In different cultures, different locations may have different values. Thus as an example, in a culture based on a left - right reading direction as per the Latin, Cyrillic, Greek and other alphabets, the top left hand corner may have a certain significance. That significance may be matched by the top right hand corner in cultures having a right - left reading direction as per the Hebrew, Arabic or Farsi alphabets.

Certain images are very eye-catching to humans, for example pictures of babies. The space immediately around such an eye-catching picture may thus be of increased value for advertising. Certain images or colors may be considered to increase value across cultures whereas certain images or colors may be considered to increase values in a culturally dependent way.

The present embodiments allow for differentiation of web space on the basis of neighboring images and the like. A content item is identified and its location on the page in relation to its neighborhood is evaluated. Is it at a prime location such as top left or top right? On the basis of the alphabet - and thus the culture - which is more valuable, top right or top left. How is it located in relation to key features or colors on the page? Based on the evaluation of the neighborhood and the content item's relationship to that neighborhood, the content item or its space is given an added value. This value may be combined with actual measured attention or alternatively, statistical analysis of viewing may be used to determine the absolute and cultural and social-demographic contributions to attention. The results can then be used to place advertising or price or value locations.

In addition, the web-site can be analyzed in terms of socio-economic or cultural audience for pricing or placing of relevant advertising in real time, based for example on geographical location of IP address, or the language on the Internet page, or the language in the personal settings on the browsers of the viewers, etc. The information can be used by the advertising servers, say Doubleclick™ to change the advertisements in real time, and other information readily available.

### Trading of Accumulated Advertising Space

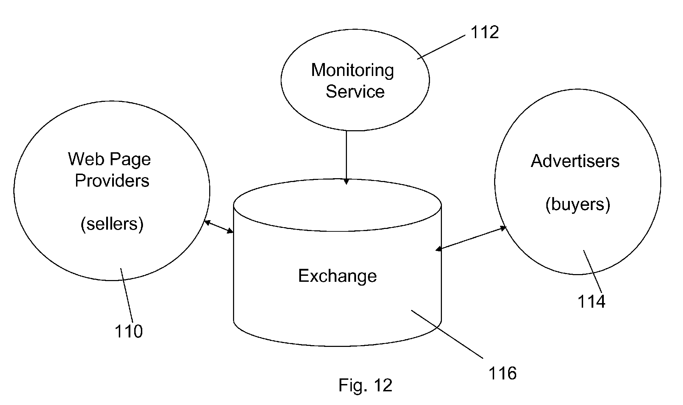

Reference is now made to Fig. 12, which is a simplified block diagram illustrating a further preferred embodiment of the present invention. In Fig. 12, web page providers 110 offer their web space for sale to advertisers. The web space is monitored by monitoring service 112 using the tail of the preferred embodiments, so that spaces of different value can be identified. Advertisers 114 then offer to purchase advertising space to a given value. In prior art systems the advertisers would be able to specify a certain number of hits or a certain overall exposure, but with the measurement methods of the present embodiments it is possible to analyze the web pages to differentiate between different locations on the page and to sell advertising space in terms of an amount of attention.

The sale can be based on past data, thus placing the advertisement on web space noted to date to give that amount of attention, or the sale can be based on current data, with the advertiser being given advertising space until his paid for amount of attention has been used up. Combinations of attention and exposure may be used as well.

Trading may be carried out over exchange 116 which automatically assigns space from web page providers to advertisers on an accumulation basis until accumulated attention amount has been used up.

### Order of Valuation and Transaction

Irrespective of the use of an exchange, space may be valued in advance and then sold, or may be sold for a duration indicated by an accumulated value. Thus the order of valuation and transaction may be interchangeable. In addition a sale may be made in which valuation is made in advance, then the transaction is made, on the basis of the initial valuation as a forecast, and then the transaction is corrected based on current measurements.

In all the above cases, measurements may be extrapolated from a sample or measurements may be made on the basis of the complete set of recipients of the web page, depending on the resources available. That is to say the tail may be incorporated with all requests for the web page or the tail may be incorporated only into a statistically balanced selection of requests.

Search engines cover large numbers of web pages and have numerous ways of ranking the web pages for relevance. Using the measurement apparatus of the present embodiments it is possible to alternatively or additionally rank pages in terms of user attention or focus. This may be carried out in relation to particular areas of the web page. For example Google has a very large number of cached pages. When a surfer wishes to find a particular page, the search engine can provide him with the page including the mechanism or tail of the present embodiments, thus obtaining focusing information dynamically from the user of his location within the viewed page. From this information the search engine is able to rank locations within the page and present summaries of the page in view of these preferred locations, or to allow the future user to enter the page scroll at the relevant location.

The search engine may obtain ranking information in general or it may obtain specific ranking information in respect of given users, who are tracked for example by cookies.

As a further point, the page may include the tail, or measurement mechanism in general, as an integral part thereof.

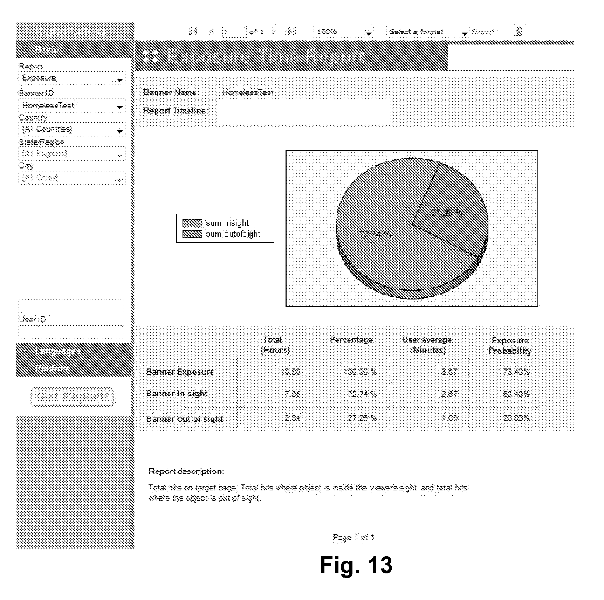

Reference is now made to fig. 13 which is a screen shot illustrating how an advertiser can find out how his advertisement is being viewed. He obtains a coherent view in intuitive mode that graphically displays the exposure of the advertisement including time viewed and time not being viewed.

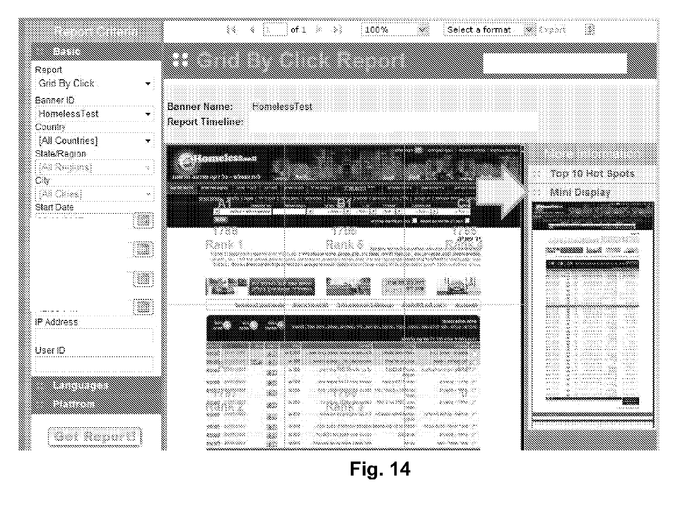

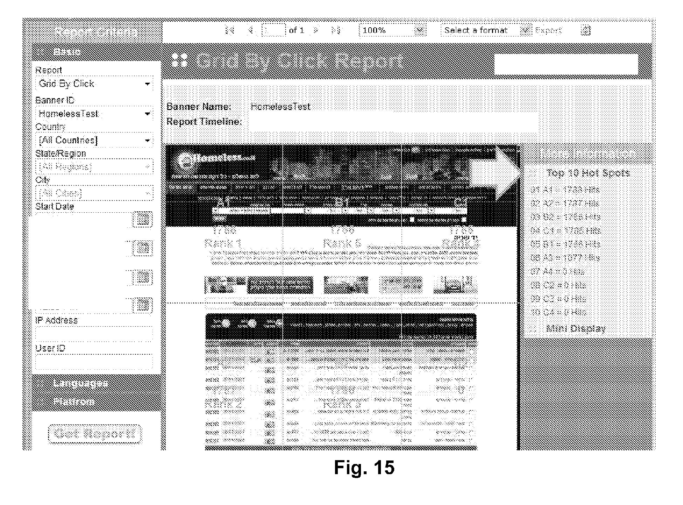

Reference is now made to Fig. 14 which is a screen shot of a further report that can be shown to an advertiser. Monitored content is superimposed over a cropped version of the web page. The cropped version is provided with a grid and clicks are associated with grid squares so that the advertiser can see at a glance which grid squares are the most active. Fig. 15 is a similar view showing a more concentrated version of the same information, to be used separately.

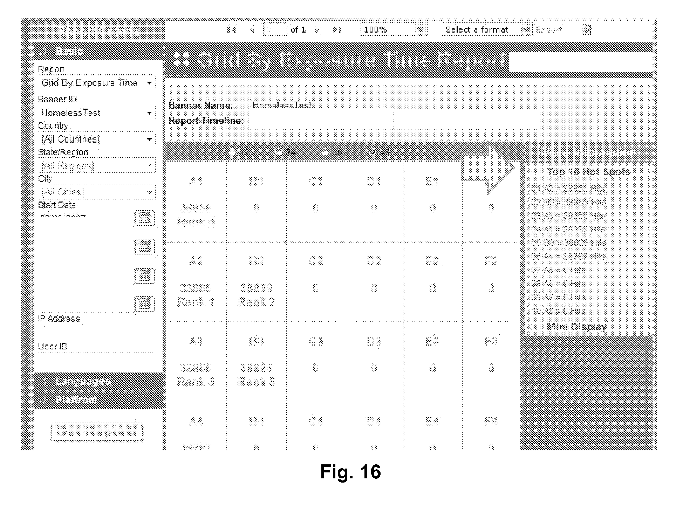

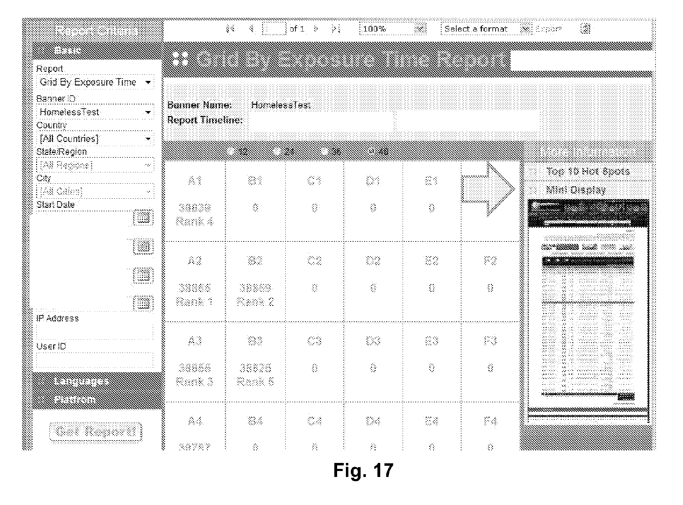

Fig. 16 shows a control screen that allows the user to set up the grid for his needs. Radio buttons above the screen set the size of the grid for the user's needs. Fig 17 shows the variable grid alongside the web page in question.

Fig. 17 illustrates an emulation of a browser with an active screen showing current movement over a web page. The screen shows an individual user, but could alternatively show an aggregation of all users.

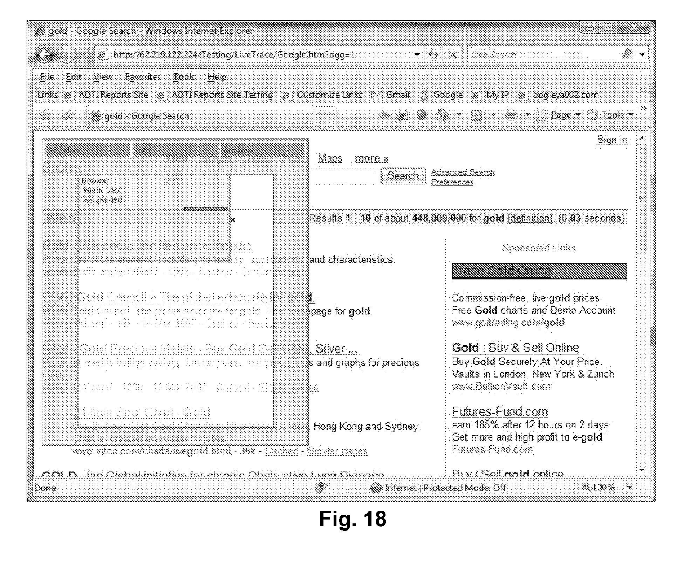

Fig. 18 shows a screen shot of a report shown to the advertiser showing him the most used spot at any given time as a cut-out. The spot may be selected by campaign, by URL, by social demographic, language - including browser setting language, by time, by grid, by physical location, by individual user, by banner location, browser type, by referrer, by operating system, screen size, type of device - e.g. PDA, or in any other way. The screen may be animated. It is expected that during the life of this patent many relevant devices and systems will be developed and the scope of the terms herein, is intended to include all such new technologies a priori.

15 It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

20 Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims. All publications, patents, and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention.

## Claims

1. System for measuring on-screen content item effectiveness, the content item being located at a predetermined location in a content page, the content page being for display through a user client defining a currently visible area such that at any given time only part of the content page is within said currently visible area, the user client allowing a user to move through the content page to change the part of the content page within the currently visible area, the system comprising:
a movement detection unit for detection of movement of the content page within the user client, and
an estimator, associated with the movement detection unit for inferring whether the content item is within the currently visible area thereby to infer the effectiveness from the amount of time the content item is visible on a user screen, wherein said movement detection unit is downloadable independently of said content.

2. The system of claim 1, wherein said content is downloaded from a first server belonging to a web page provider and said movement detection unit is downloadable from a second server distinct from said first server as a web page add-on.

3. The system of claim 1, further comprising an output module for reporting said inferred effectiveness, said output module comprising a grid mechanism for presenting user activity over content page per grid square.

4. The system of claim 3, further comprising a grid setting mechanism for allowing setting of a grid size, or a dynamic screen for showing current user activity as reported, and wherein said current user activity is aggregated activity over a plurality of users.

5. The system of any preceding claim wherein said estimator is further configured for inferring the effectiveness of the content item by estimating a relative location from neighboring content, evaluating at least one of an absolute and cultural value of said neighboring content and an absolute and cultural value of said relative location, and estimating said effectiveness from a combination of said relative location and said absolute and cultural value of said neighboring content, or wherein said estimator is further configured to change settings at an advertising server based on said evaluating, thereby to provide advertisements of absolute or cultural relevance to a viewer.

6. The system of any preceding claim, the web content being provided with a tail, the tail being distributed with respective content pages, the tail comprising the movement detection unit and the estimator, wherein the system further comprises at least one member of the group comprising an exchange for selling spaces within content pages based on evaluations by said estimator, thereby to use said estimating as a basis for exchange for trading space in web content, and a content placement unit for placing content on content pages to a value based on said estimated effectiveness, and wherein said evaluation is one member of the group consisting of an advance valuation and said placing of content is to a value based on said evaluation as a forecast, or wherein said evaluation is a real time evaluation and said placement is made against accumulating evaluation.

7. A system according to any one of claims 1 to 6, wherein said movement detection unit is downloadable independently of said content, the system further comprising a session identification associated with the movement detection unit for identification of the session in which the movement detection unit was downloaded, the session identification being limited by at least one member of the group comprising time since download, object lifetime, time when a corresponding object is out of view, time when no movement is detected, time when no attention close to an object is detected, and by a page refresh action.

8. The system of claim 7, wherein said session identification comprises an indication of a uniform resource locator (URL) of a web page to which said session relates, or wherein the session identification is associated with an item of a source webpage, such that different items sharing a same source webpage have different session identifications, or wherein the session identification is limited by at least one member of the group comprising time since download, object lifetime, and by a page refresh action.

9. The system of any one of claims 1 to 8, further comprising a ranking mechanism associated with a search engine, the ranking mechanism being able to use said estimate to provide to a searcher indications of a more relevant part of a web page.

10. The system of claim 9, wherein said ranking mechanism is further configured to provide to said searcher a page scrolled to said relevant part, or ranking information for specific users.

11. Internet Service Provider system for measuring web-site volume downloading, the downloaded volume being for play by a user through a user client, the system comprising:
a source-specific download detection unit for detection of download volume associated with a given web-site source, and
a reporting unit for reporting to the Internet service provider said detected volume, thereby to allow said Internet service provider to react to bandwidth used by said downloading.

12. The system of claim 11, wherein the source-specific download detection unit is additionally at least one member of the group comprising user specific, and session specific.

13. Method for measuring on-screen content item effectiveness, the content item being located at a predetermined location in a content page, the content page being for display through a user client defining a currently visible area such that at any given time only part of the content page is within said currently visible area, the user client allowing a user to move through the content page to change the part of the content page within the currently visible area, the method comprising:
detection of movement of the content page within the user client, and
inferring whether the content item is within the currently visible area thereby to infer the effectiveness from the amount of time the content item is visible on a user screen, wherein said movement detection unit is downloadable independently of said content.

14. The method of claim 13, further comprising:
inferring the effectiveness of the content item by estimating a relative location from neighboring content, evaluating at least one of an absolute and cultural value of said neighboring content, and an absolute and cultural value of said relative location and estimating said effectiveness from a combination of said relative location and said absolute and cultural value of said neighboring content, or
evaluating a neighborhood of the content item for absolute and cultural factors, and attributing said inferred effectiveness to said neighborhood absolute and cultural factors, and
placing content on content pages to a value based on said effectiveness.

15. The method of claim 13 or claim 14, comprising:
providing tails together with respective content pages, the tails comprising functionality for said movement detection and evaluation, and
selling spaces within content pages based on said evaluating.
